# EUROPEAN PATENT APPLICATION

(11) **EP 4 796 295 A1**
(43) Date of publication of application: **26.08.2026**
(21) Application number: 26160772.5
(22) Date of filing: 25.02.2026
(51) Int. Cl.: B29C 65/02, B29C 65/34, B29C 65/36, B29C 65/48, B29C 65/50, B29K 105/06, B29K 101/12, B29C 65/06, B29C 65/08

(54) **METHOD OF JOINING THERMOPLASTIC COMPONENTS USING A SHIM ASSEMBLY**

(30) Priority: 25.02.2025 US 202563763009 P
(71) Applicant: Rohr, Inc., Chula Vista, CA 91910-2098 (US)
(72) Inventor: ZHAO, Wenping, Glastonbury, 06033 (US); ALMS, Justin B., Coventry, CT, 06238 (US); GANGLOFF, John J., Middletown, CT, 06457 (US)
(74) Representative: Dehns

(57) **Abstract**

In a method for joining thermoplastic components, a first component (22) comprising a first fibre-reinforced thermoplastic composite and a second component (24) comprising a second fibre-reinforced thermoplastic composite are provided with a shim assembly (66) arranged at the interface (48) between the first and the second components (22, 24). The shim assembly comprises a shim element (80) and an interface material (82). The first component (22) is welded to the second component (24) through the shim assembly (66) at the interface (48).

## Description

### BACKGROUND

### 1. Technical Field

This disclosure relates generally to forming thermoplastic structures and, more particularly, to welding thermoplastic components together.

### 2. Background Information

Thermoplastic materials are increasingly being used in various aerospace applications. Various methods are known in the art for welding thermoplastic material components together. While these known methods have various advantages, there is still room in the art for improvement. There is a need in the art therefore for improved methods for forming thermoplastic structures with multiple components welded together.

### SUMMARY OF THE DISCLOSURE

According to one, a method for joining thermoplastic components is provided. During the method, a first component is provided that is configured from or otherwise includes a first fiber-reinforced thermoplastic composite. A second component is provided that is configured from or otherwise includes a second fiber-reinforced thermoplastic composite. A shim assembly is arranged at an interface between the first component and the second component. The shim assembly comprises a shim element and an interface material. The first component is welded to the second component through the shim assembly at the interface.

In embodiments, the second component may be welded to the first component through the shim assembly along a length of the interface.

In embodiments, the second component may be welded directly to the first component along a first portion of the interface, and the second component may be welded to the first component through the shim assembly along a second portion of the interface.

In embodiments, the shim assembly may extend vertically between the first component and the second component. The shim assembly may have a constant vertical thickness as the shim assembly extends at least one of longitudinally or laterally along the interface.

In embodiments, the shim assembly may extend vertically between the first component and the second component. The shim assembly may have a vertical thickness that changes as the shim assembly extends at least one of longitudinally or laterally along the interface.

In embodiments, a plurality of interface materials may comprise the interface material. The shim element may be arranged between a first of the plurality of interface materials and a second of the plurality of interface materials.

In embodiments, the method may further comprise selecting one of a plurality of shim assemblies based on a configuration of a gap between the second component and the first component at the interface without the shim assembly. The one of the plurality of shim assemblies may be selected based on a size of the gap.

In embodiments, the one of the plurality of shim assemblies may be selected based on a geometry of the gap.

In embodiments, the interface material may comprise an energy director, a susceptor or a resistance heating element.

In embodiments, the method may further comprise welding the first component to the second component at a second interface that is discrete from the interface.

In embodiments, the shim assembly may be configured as a unitary structure.

In embodiments, a plurality of shim elements may comprise the shim element. The interface material may be arranged between a first of the plurality of shim elements and a second of the plurality of shim elements.

In embodiments, a plurality of shim elements may comprise the shim element, and a plurality of interface materials may comprise the interface material. A first of the plurality of interface materials may be arranged between a first of the plurality of shim elements and a second of the plurality of shim elements. The first of the plurality of shim elements may be arranged between the first of the plurality of interface materials and a second of the plurality of interface materials. The second of the plurality of shim elements may be arranged between the first of the plurality of interface materials and a third of the plurality of interface materials.

In embodiments, the shim element may be constructed of a material configured from or otherwise including a fiber-reinforced thermoplastic composite.

In embodiments, the welding may comprise one of ultrasonic welding, vibration welding or induction welding the first component to the second component through the shim assembly at the interface.

In embodiments, the interface material may be configured as or otherwise include a polymeric film or mesh.

In embodiments, the method may further comprise forming an aircraft component. The aircraft component may comprise the first component, the second component and the shim assembly. The first component may form an exterior surface of the aircraft component.

According to another aspect, a method for joining thermoplastic components for an aircraft is provided. During the method, a first component is arranged with a second component. The first component may be configured from or otherwise include a first fiber-reinforced thermoplastic composite. The second component may be configured from or otherwise include a second fiber-reinforced thermoplastic composite. A gap is disposed at an interface between the first component and the second component. A parameter of the gap is determined. A shim assembly is selected based on the parameter to provide a selected shim assembly. The selected shim assembly comprising a shim element and an interface material. The selected shim assembly is arranged between the first component and the second component at the interface. The first component is welded to the second component through the selected shim assembly at the interface. The welding includes vibration welding, ultrasonic welding and/or induction welding.

In embodiments, a plurality of interface materials comprise the interface material. The step of arranging the selected shim assembly may further include arranging a first of the plurality of interface materials between the first component and the shim element, and arranging a second of the plurality of interface materials between the second component and the shim element.

According to another aspect, a method for joining a thermoplastic component for an aircraft is provided. During the method, a first component is arranged with a second component. The first component may be configured from or otherwise include a first fiber-reinforced thermoplastic composite. The second component may be configured from or otherwise include a second fiber-reinforced thermoplastic composite. A gap is between the first component and the second component at an interface between the first component and the second component. A parameter of the gap is determined. A shim assembly is provided based on the parameter. The shim assembly comprises a shim element and a plurality of interface materials. The shim assembly is arranged between the first component and the second component at the interface. A first of the plurality of interface materials is arranged between the first component and the shim element. A second of the plurality of interface materials is arranged between the second component and the shim element. The first component is welded to the second component through the shim assembly at the interface. The welding includes vibration welding, ultrasonic welding and/or induction welding

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1A is an illustration of a lateral view of a partial fiber-reinforced thermoplastic structure according to an embodiment of the present disclosure.
FIG. 1B is an illustration of a longitudinal view of a partial fiber-reinforced thermoplastic structure according to an embodiment of the present disclosure.
FIG. 2 is a partial sectional illustration of a structure component with a multi-layer configuration according to an embodiment of the present disclosure.
FIG. 3A is a lateral sectional illustration of a portion of the fiber-reinforced thermoplastic structure at an inter-component gap according to an embodiment of the present disclosure.
FIGS. 3B and 3C are longitudinal sectional illustrations of portions of the fiber-reinforced thermoplastic structure at the inter-component gap with various configurations according to embodiments of the present disclosure.
FIG. 4A is a lateral sectional illustration of a portion of the fiber-reinforced thermoplastic structure at an inter-component shim assembly according to an embodiment of the present disclosure.
FIGS. 4B and 4C are longitudinal sectional illustrations of portions of the fiber-reinforced thermoplastic structure at the inter-component shim assembly with various configurations according to embodiments of the present disclosure.
FIGS. 5A and 5B are lateral sectional illustrations of the inter-component shim assembly with various vertical heights along its width.
FIGS. 6A-C are longitudinal sectional illustration of the inter-component shim assembly with various vertical heights along its length.
FIGS. 7A and 7B are partial sectional illustrations of the inter-component shim assembly with various configurations of shim elements and interface materials according to embodiments of the present disclosure.
FIGS. 8A and 8B are partial sectional illustrations of a shim element with various constructions according to embodiments of the present disclosure.
FIG. 9 is a flow diagram of a method for manufacturing a structure.
FIG. 10A is a schematic illustration of multiple inter-component shim assemblies with various different configurations.
FIGS. 10B-D are schematic illustrations of various configurations of the inter-component shim assembly according to embodiments of the present disclosure.

### DETAILED DESCRIPTION

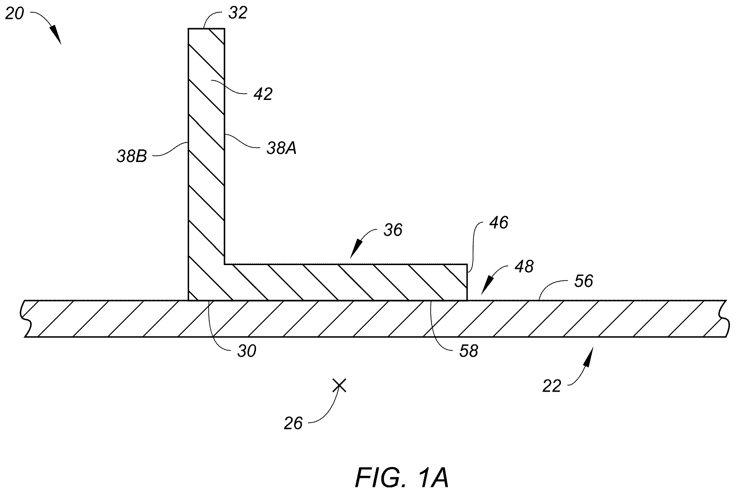

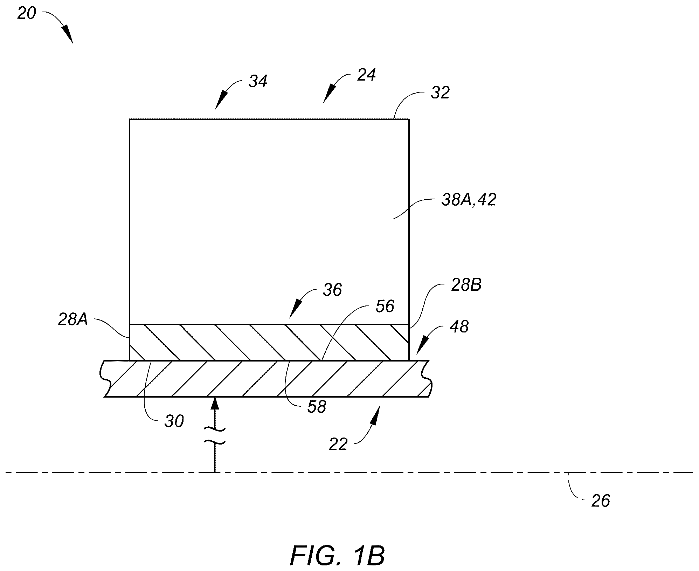

FIGS. 1A and 1B illustrate a portion of a fiber-reinforced thermoplastic structure 20 for an aircraft. This structure 20 may be configured as part of a propulsion system for the aircraft. The structure 20, for example, may be configured as a component of a nacelle. Examples of the nacelle component include, but not limited to, a fan cowl, an outer barrel, an inner barrel, an inlet lip skin and a translating sleeve. The structure 20 may alternatively be configured as a component of a fuselage or a wing of the aircraft. The structure 20 may still alternatively be configured as a component arranged within the aircraft fuselage; e.g., a component within a cabin of the aircraft. The present disclosure, however, is not limited to the foregoing exemplary aircraft structures. Furthermore, it is contemplated the structure 20 of the present disclosure may also be configured for non-aircraft applications. However, for ease of description, the structure 20 may be referred to and/or described below as an aircraft structure such as the nacelle structure.

The aircraft structure 20 of FIG. 1A and 1B includes a plurality of components including a first thermoplastic composite part 22 and a second thermoplastic composite part 24. The second thermoplastic composite part 24 may be configured as or otherwise include a stiffener, a pedestal, a structural core and/or any other member which stiffens, holds, locates and/or otherwise supports the aircraft structure 20 and/or the first thermoplastic composite part 22. Examples of the stiffener include, but are not limited to, a rib, a stringer, a longeron, a beam and a truss. However, for ease of description, the second thermoplastic composite part 24 may be referred to and/or described below as a stiffener; e.g., an L-shaped stiffener.

The second thermoplastic composite part 24 of FIG. 1A and 1B extends longitudinally along a longitudinal axis 26 of the second thermoplastic composite part 24. The second thermoplastic composite part 24 extends laterally between and to a first side 28A of the second thermoplastic composite part 24 and a second side 28B of the second thermoplastic composite part 24. The second thermoplastic composite part 24 extends vertically between and to an exterior side 30 of the second thermoplastic composite part 24 and an interior side 32 of the second thermoplastic composite part 24.

The second thermoplastic composite part 24 of FIG. 1A and 1B includes a flange 34 and a mount 36. The flange 34 extends longitudinally along the longitudinal centerline 26. The flange 34 extends laterally between and to a first side 38A of the flange 34 and a second side 38B of the flange 34. The flange 34 extends vertically between and to (or about) the interior side 32 and the exterior side 30 of the second thermoplastic composite part 24.

The mount 36 is connected to (e.g., formed integral with) the flange 34. The mount 36 is disposed at (e.g., on, adjacent or proximate) the exterior side 30 of the second thermoplastic composite part 24. The mount 36 projects laterally out from a flange sidewall 42 to a distal end 46 of the mount 36. The mount 36 is welded to the first thermoplastic composite part 22 at / along an interface 48 between the second thermoplastic composite part 24 (e.g., the mount 36) and the first thermoplastic composite part 22.

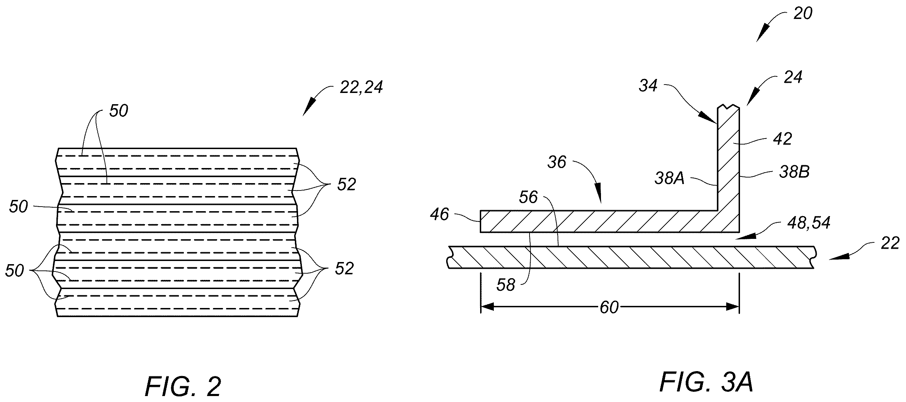

Referring to FIG. 2, the aircraft structure components 22 and 24 may be constructed from one or more layers of component material, where the component materials of the aircraft structure components 22 and 24 may be common component materials (e.g., the same component materials) or unique component materials (e.g., different component materials). Each component material may be a fiber-reinforced thermoplastic composite. Fiber-reinforcement 50, for example, may be embedded within a thermoplastic material 52; e.g., a thermoplastic matrix. Examples of the fiber-reinforcement 50 include, but are not limited to, metal fibers (e.g., aluminum fibers, brass fibers, and stainless steel fibers), carbon fibers including graphite fibers (e.g., polyacrylonitrile (PAN)-based carbon fibers, rayon-based carbon fibers, lignin-based carbon fibers, and pitch-based carbon fibers), insulating fibers (e.g., glass fibers), organic fibers (e.g., aramid fibers, polyparaphenylene benzoxazole (PBO) fibers, polyphenylene sulfide fibers, polyester fibers, acrylic fibers, nylon fibers, and polyethylene fibers), and inorganic fibers (e.g., silicon carbide fibers and silicon nitride fibers). Some or all of these fibers may be continuous fibers. Some or all of the fibers may also or alternatively be chopped fibers. The present disclosure, however, is not limited to the foregoing exemplary fiber-reinforcement materials or fiber types.

Examples of the thermoplastic material 52 include, but are not limited to, a semicrystalline thermoplastic resin and an amorphous thermoplastic resin. Examples of the semicrystalline thermoplastic resin include, but are not limited to, polyester, polyolefin, polyoxymethylene (POM), polyamide (PA), polyarylene sulfide, polyketone (PK), polyetherketone (PEK), polyether ether ketone (PEEK), polyether ketone ketone (PEKK), polyvinylidene fluoride (PVDF), polytetrafluoroethylene (PTFE), polyaryletherketone (PAEK), polyether nitrile (PEN), fluororesin, and liquid crystal polymer (LCP). Examples of the polyester include, but are not limited to, polyethylene terephthalate (PET), polybutylene terephthalate (PBT), polytrimethylene terphthalate (PTT), polyethylene naphthalate (PEN), and liquid crystal polyester. Examples of the polyolefin include, but are not limited to, polyethylene (PE), polypropylene (PP), and polybutylene. An example of the polyarylene sulfide includes, but is not limited to, polyphenylene sulfide (PPS). An example of the fluororesin includes, but is not limited to, polytetrafluoroethylene. Examples of the amorphous thermoplastic resin include, but are not limited to, polystyrene, polycarbonate (PC), polymethyl methacrylate (PMMA), polyvinyl chloride (PVC), polyphenylene ether (PPE), polyimide (PI), polyamide imide (PAI), polyetherimide (PEI), polysulfone (PSU), polyether sulfone (PES), and polyarylate (PAR). The present disclosure, however, is not limited to the foregoing exemplary thermoplastic materials.

The aircraft structure components 22 and 24 are formed using one or more manufacturing processes. Examples of these manufacturing processes include, but are not limited to, stamp forming, compression molding, injection molding, over-molding and laminating. Referring to FIGS. 3A-C, due to (e.g., dimensional, geometric, etc.) deviations in the aircraft structure components 22 and 24 within tolerances for the respective manufacturing process(es), one or more inter-component gaps 54 (one visible in FIGS. 3A-C) may be defined when the actual second thermoplastic composite part (versus the design space second thermoplastic composite part) is arranged with (e.g., abutted against, engaged with, etc.) the actual first thermoplastic composite part (versus the design space first thermoplastic composite part). The inter-component gap 54 of FIGS. 3A-C, for example, is formed vertically between the second thermoplastic composite part 24 and the first thermoplastic composite part 22. More particularly, the inter-component gap 54 of FIGS. 3A-C extends vertically between and to a skin surface 56 of the first thermoplastic composite part 22 and a mount surface 58 of the second thermoplastic composite part 24 and the mount 36, where these component surfaces 56 and 58 are typically designed to contact one another (e.g., lay flush against one another) absent deviations.

The inter-component gap 54 of FIG. 3A extends (e.g., partially or completely) laterally across the interface 48 between the first thermoplastic composite part 22 and the mount 36. The inter-component gap 54 of FIG. 3A, for example, extends along an entire lateral width 60 of the mount 36 and the mount surface 58. Of course, in other embodiments, at least a portion of the second thermoplastic composite part 24 and the mount surface 58 may contact and/or lay flush against the first thermoplastic composite part 22 and the skin surface 56.

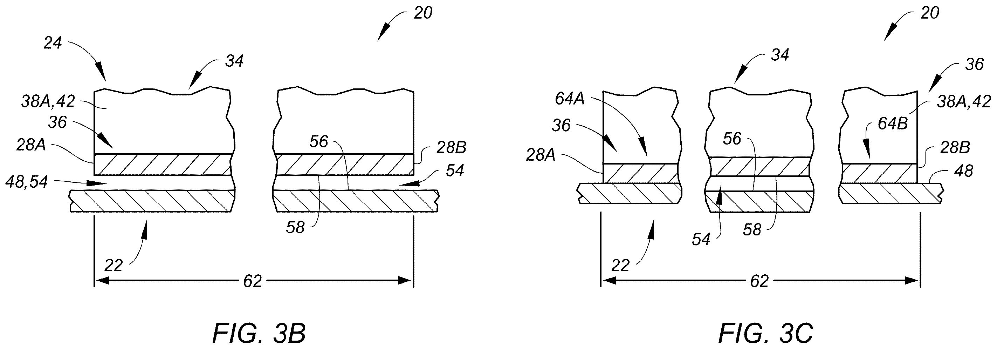

The inter-component gap 54 of FIGS. 3B and 3C extends (e.g., partially or completely) longitudinally along the interface 48 between the first thermoplastic composite part 22 and the mount 36. The inter-component gap 54 of FIG. 3B, for example, extends along an entire longitudinal length 62 of the mount 36 and the mount surface 58. The inter-component gap 54 of FIG. 3C, by contrast, extends along a portion of the longitudinal length 62 of the mount 36 and the mount surface 58. With such an arrangement, one or more portions 64A and 64B of the mount 36 and the mount surface 58 may vertically contact (e.g., lay flush against) the first thermoplastic composite part 22 and the skin surface 56.

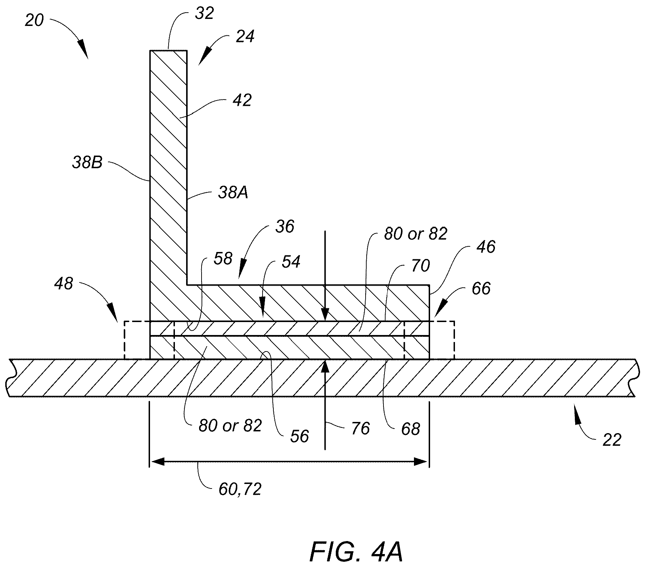

Referring to FIGS. 4A-C, to accommodate the deviations in one or more of the aircraft structure components 22 and 24, an inter-component shim assembly 66 may be provided to plug and/or bridge one or more of the inter-component gaps 54. The inter-component shim assembly comprises a shim element 80 and one or more interface materials 82.

The inter-component shim assembly 66 of FIGS. 4A-C, for example, is disposed vertically between the second thermoplastic composite part 24 and the first thermoplastic composite part 22. More particularly, the inter-component shim assembly 66 of FIGS. 4A-C extends vertically between and to the skin surface 56 and the mount surface 58. A skin side surface 68 of the inter-component shim assembly 66 may thereby vertically contact (e.g., lay flush against) the skin surface 56. A mount side surface 70 of the inter-component shim assembly 66 may vertically contact (e.g., lay flush against) the mount surface 58. The inter-component shim assembly 66 may be configured with exactly or substantially the same configuration (e.g., size, geometry, etc.) of a respective inter-component gap 54 (see also FIGS. 3A-C) such that the inter-component shim assembly 66 of FIGS. 4A-C completely or substantially fills and/or bridges the inter-component gap 54.

The inter-component shim assembly 66 of FIG. 4A extends (e.g., partially or completely) laterally across the interface 48 between the first thermoplastic composite part 22 and the mount 36. The inter-component shim assembly 66 of FIG. 4A, for example, extends along the entire lateral width 60 of the mount 36 and the mount surface 58. Of course, in other embodiments, a lateral width 72 of the inter-component shim assembly 66 may be slightly larger than or slightly smaller than the lateral width 60 of the mount 36 and mount surface 58; e.g., see dashed lines.

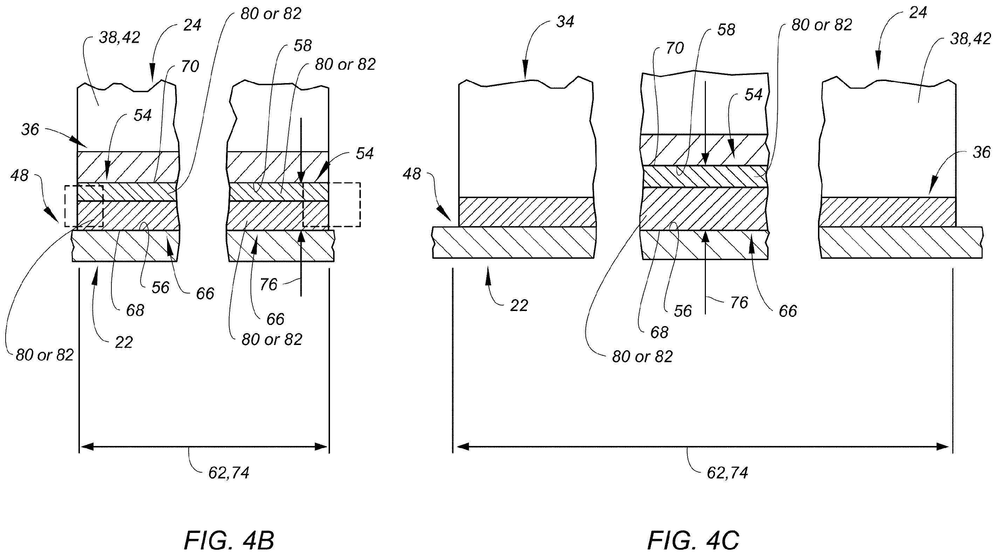

The inter-component shim assembly 66 of FIGS. 4B and 4C extends (e.g., partially or completely) longitudinally along the interface 48 between the first thermoplastic composite part 22 and the mount 36. The inter-component shim assembly 66 of FIG. 4B, for example, extends along the entire longitudinal length 62 of the mount 36 and the mount surface 58. Of course, in other embodiments, a longitudinal length 74 of the inter-component shim assembly 66 may be slightly larger than or slightly smaller than the longitudinal length 62 of the mount 36 and mount surface 58; e.g., see dashed lines. With such an arrangement, a surface area of the mount surface 58 may be equal to exactly, or between ninety percent (90%) and one-hundred and ten percent (110%) (e.g., between 95% and 105%) of, of a surface area of the mount side surface 70 of the shim assembly 66. The inter-component shim assembly 66 of FIG. 4C, by contrast, extends along a portion of the longitudinal length 62 of the mount 36 and the mount surface 58. With such an arrangement, one or more portions of the mount 36 and the mount surface 58 adjacent the inter-component shim assembly 66 may vertically contact (e.g., lay flush against) the first thermoplastic composite part 22 and the skin surface 56. The surface area of the mount surface 58 may thereby be equal to less than the surface area of the mount surface 70 of the shim assembly 66. The surface area of the mount surface 58, for example, may be equal to between (a) five percent (5%) and twenty-five percent (25%), (b) twenty-five percent (25%) and fifty percent (50%), (c) fifty percent (50%) and seventy-five percent (75%), or (d) seventy-five percent (75%) and ninety-five percent (95%) of the surface area of the mount surface 70 for the shim assembly 66.

By filling in / bridging the inter-component gap 54 with the inter-component shim assembly 66 at the interface 48, the second thermoplastic composite part 24 and the mount 36 may be welded to the first thermoplastic composite part 22 along an entirety of, a substantial portion of, or various predetermined locations along a longitudinal length of the interface 48. By contrast, where an inter-component gap 54 remains unfilled, only a portion (if any) of the second thermoplastic composite part 24 may be welded to the first thermoplastic composite part 22 along the interface 48. Furthermore, provision of the inter-component shim assembly 66 may facilitate arranging the second thermoplastic composite part 24 with the first thermoplastic composite part 22 without deforming (e.g., bending, deflecting, twisting, etc.) either of these aircraft structure components 22 and 24 to fit flush against one another. Such deformation may impart undesirable internal stresses within the aircraft structure 20 and/or lead to deformation (e.g., warping or otherwise misshaping) of the aircraft structure 20.

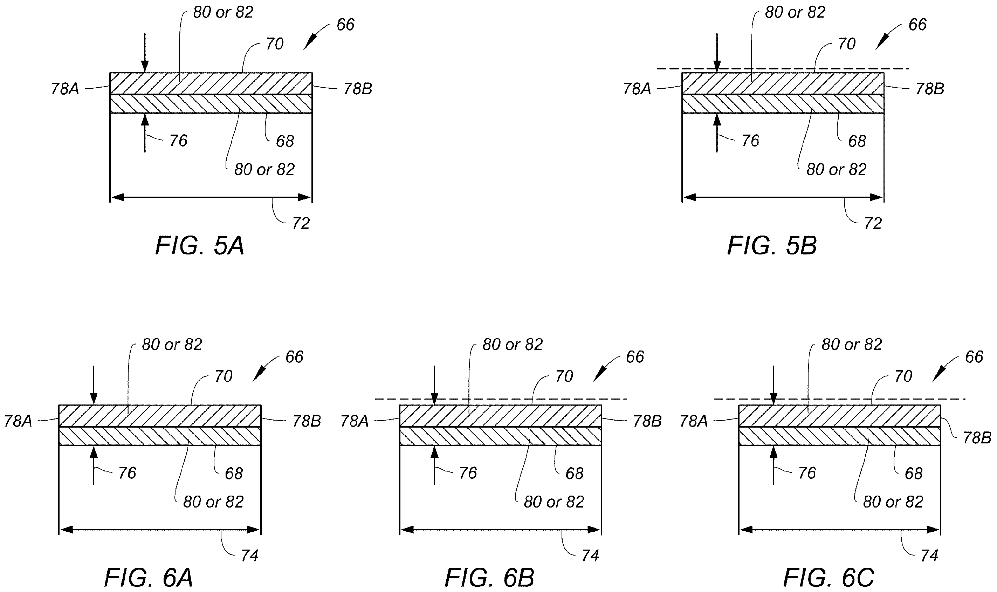

In some embodiments, referring to FIG. 5A, a vertical thickness 76 of the inter-component shim assembly 66 (e.g., a vertical thickness of the shim element 80, the interface material(s) 82 or both) may remain constant laterally across the inter-component shim assembly 66. In other embodiments, referring to FIG. 5B, the vertical thickness 76 of the inter-component shim assembly 66 (e.g., the vertical thickness of the shim element 80, the interface material(s) 82 or both) may (e.g., continuously or intermittently) vary laterally across the inter-component shim assembly 66. The vertical thickness 76 of the inter-component shim assembly 66 of FIG. 5B, for example, decreases as the inter-component shim assembly 66 extends laterally from a first side 78A (e.g., a left side in FIG. 5B) of the inter-component shim assembly 66 to a second side 78B (e.g., a right side in FIG. 5B) of the inter-component shim assembly 66; e.g., the inter-component shim assembly 66 may vertically taper along the lateral width 72 thereof.

In some embodiments, referring to FIG. 6A, the vertical thickness 76 of the inter-component shim assembly 66 (e.g., the vertical thickness of the shim element 80, the interface material(s) 82 or both) may remain constant longitudinally along the inter-component shim assembly 66. In other embodiments, referring to FIGS. 6B and 6C, the vertical thickness 76 of the inter-component shim assembly 66 (e.g., the vertical thickness of the shim element 80, the interface material(s) 82 or both) may (e.g., continuously or intermittently) vary longitudinally across the inter-component shim assembly 66. The vertical thickness 76 of the inter-component shim assembly 66 of FIG. 6B, for example, decreases as the inter-component shim assembly 66 extends longitudinally from a first end 78A (e.g., a left end in FIG. 6B) of the inter-component shim assembly 66 to a second end 78B (e.g., a right end in FIG. 6B) of the inter-component shim assembly 66; e.g., the inter-component shim assembly 66 may vertically taper along a longitudinal length 74 thereof. In another example, referring to FIG. 6C, the vertical thickness 76 of the inter-component shim assembly 66 may increase and then decrease as the inter-component shim assembly 66 extends longitudinally from the shim assembly first end 78A to the shim assembly second end 78B; e.g., the inter-component shim assembly 66 may vertically flare out and then taper along the longitudinal length 74 thereof.

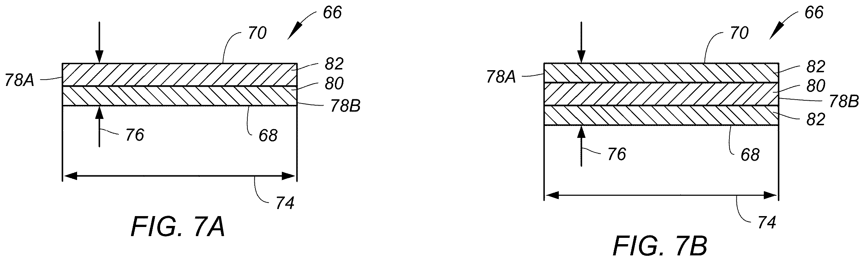

Referring to FIG. 7A and 7B, the inter-component shim assembly 66 is configured with or otherwise includes the shim element 80 and one or more of the interface materials 82. The interface material(s) 82 are configured with the shim element 80 to form an integrated (e.g., unitary) inter-component shim assembly 66. Other configurations are not meant to be precluded. In some embodiments, the interface material(s) 82 may be formed separately from the shim element 80, forming discrete layers of materials comprising the inter-component shim assembly 66.

The interface material(s) 82 of FIG. 7A and 7B, for example, may be configured as an energy director, a susceptor, a resistance heating element, etc. The interface material(s) 82, for example, may be constructed of a material comprising a polymeric film or mesh when the interface material(s) 82 is configured as an energy director or a resistance heating element. In some embodiments, the interface material(s) 82 may be constructed of a material comprising silicon carbide, molybdenum, steel, Invar^{®}, Kovar^{®} and the like. In such a configuration, the interface material 82 is configured as a susceptor capable of heating via induction.

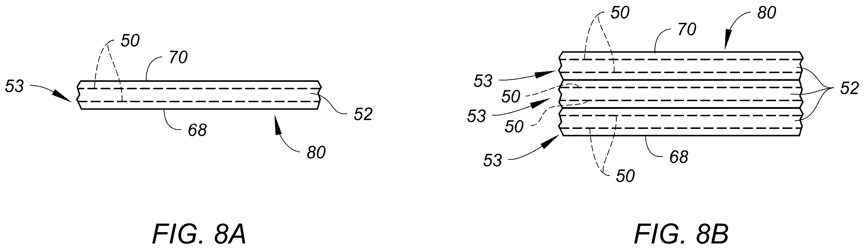

Referring to FIG. 8A and 8B, the shim element 80 may be constructed from one or more layers 53 of a material that is the same as or different than the first thermoplastic composite part material and/or the second thermoplastic composite part material. Each shim element 80, more particularly, may be constructed from a fiber-reinforced thermoplastic composite. Fiber-reinforcement 50, for example, may be embedded within a thermoplastic material 52; e.g., a thermoplastic matrix. Various examples of the fiber-reinforcement 50 and the thermoplastic material 52 are described above; however, the present disclosure is not limited to such exemplary materials.

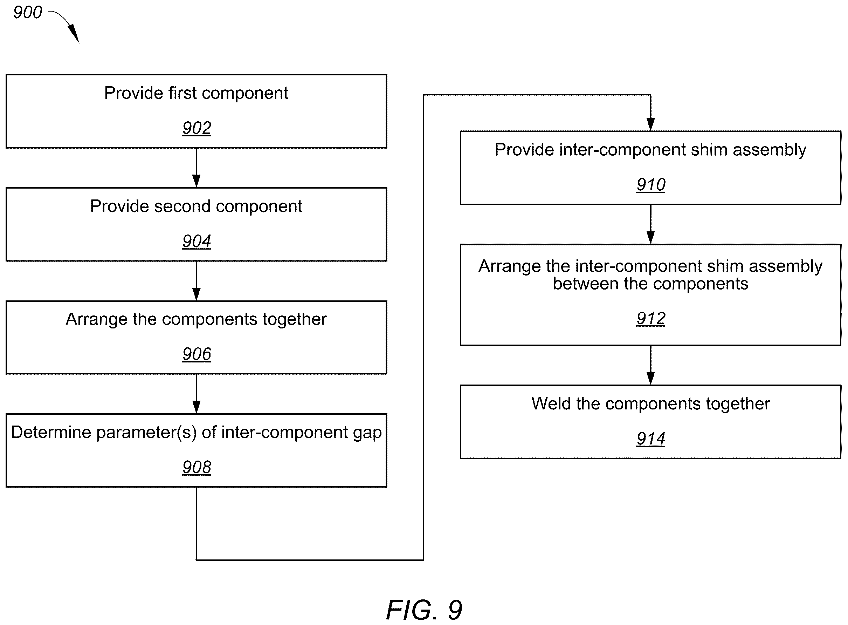

FIG. 9 is a flow diagram of a method 900 for manufacturing a structure such as, but not limited to, the aircraft structure 20 described above. For ease of description, this method 900 is described below utilizing one inter-component shim assembly 66 for the mount 36. However, in other embodiments, the mount 36 may be arranged with multiple inter-component shim assemblies 66.

In step 902, a first component of the aircraft structure 20 is provided. The first thermoplastic composite part 22, for example, may be stamp formed, compression molded, injection molded, over-molded and laminated and/or otherwise manufactured as the first component.

In step 904, a second component of the aircraft structure 20 is provided. The second thermoplastic composite part 24, for example, may be stamp formed, compression molded, injection molded, over-molded and laminated and/or otherwise manufactured as the second component.

In step 906, the first component is arranged with the second component. The second thermoplastic composite part 24, for example, may be disposed with the first thermoplastic composite part 22 for a test fit. More particularly, referring to FIGS. 3A-C, the second thermoplastic composite part 24 is abutted against the first thermoplastic composite part 22 such that the mount surface 58 at least partially contacts the skin surface 56. Due to deviations in the aircraft components 22 and 24 within tolerances for the respective manufacturing process(es) of steps 902 and/or 904, at least one inter-component gap 54 is formed between the second thermoplastic composite part 24 and the first thermoplastic composite part 22. This inter-component gap 54 extends between the mount 36 and the first thermoplastic composite part 22.

In step 908, one or more parameters of the inter-component gap 54 are determined. One or more dimensions (e.g., vertical height, lateral width and/or longitudinal length) of the inter-component gap 54 may be measured and/or otherwise determined. A geometry (e.g., shape, contour, etc.) of the inter-component gap 54 may also or alternatively be scanned, modeled and/or otherwise determined.

In step 910, an inter-component shim assembly 66 including at least one shim element 80 and at least one interface material 82 is provided based on the one or more determined parameters. The at least one shim element 80, the at least one interface material 82 or both, for example, may be stamp formed, compression molded, injection molded, over-molded and laminated and/or otherwise manufactured according to the dimension(s) and/or geometry determined in the step 908. The inter-component shim assembly 66 may be pre-consolidated as a single (e.g., unitary) structure or may be formed as a plurality of unconsolidated layers formed by the at least one shim element 80 and the at least one interface material 82. The inter-component shim assembly 66 may thereby be provided as a made-to-fit (e.g., an exact fit) shimming assembly that substantially or completely fills and/or bridges the inter-component gap 54. The inter-component shim assembly 66, for example, may be selected using a single shim element 80 and a single interface material 82 or may be selected using a plurality of shim elements 80 and a plurality of interface materials. The shim elements 80, the interface materials 82 or both may include similar or different geometries.

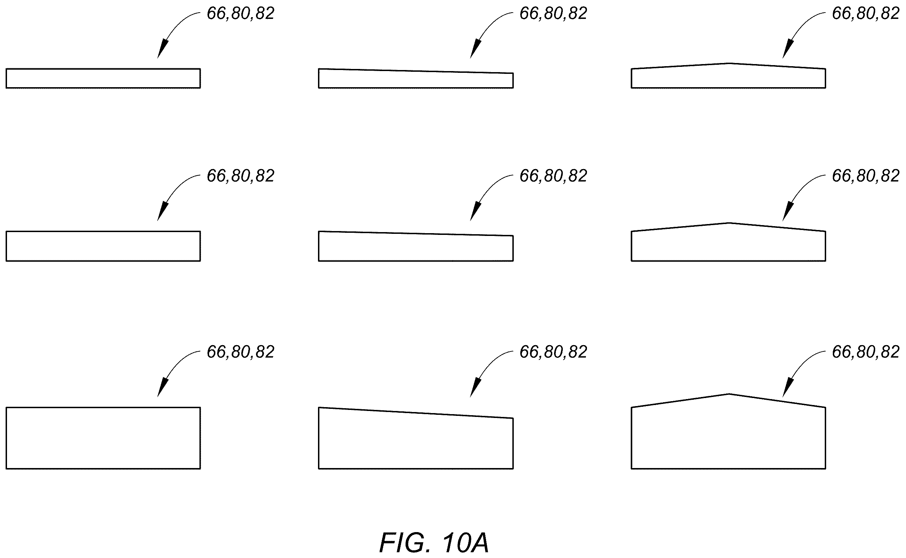

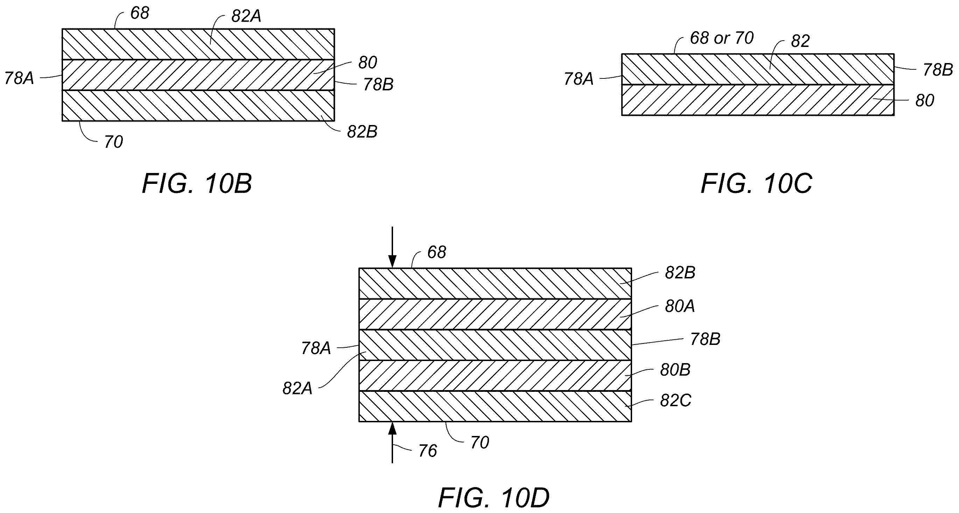

Referring to FIGS. 10A-D, for example, prior to the step 908 and/or performance of this method 900, one or more inter-component shim assemblies 66 may be manufactured using different shim assembly configurations (see FIGS. 10B-D) and including different sizes and/or geometries of the inter-component shim assembly 66 and/or one or more of its components 80, 82 (see FIG. 10A). The inter-component shim assembly 66 may include, for example, a shim element 80 arranged between a first interface material 82A and a second interface material 82B (see FIG. 10B), or may include a single interface material 80 arranged with the skin side surface 68 of the inter-component shim assembly 66 or the mount side surface 70 of the inter-component shim assembly 66 (see FIG. 10C). In some embodiments, referring to the shim assembly configuration of FIG. 10D, the inter-component shim assembly 66 may include a first shim element 80A, a second shim element 80B, and one or more interface materials 82. The first shim element 80A may be spaced from the second shim element 80B, such that a first interface material 82A is arranged between the first shim element 80A and the second shim element 80B. Optionally, the first shim element 80A and the second shim element 80B of the inter-component shim assembly 66 may be spaced from the first component and the second during welding via a second interface material 82B and a third interface material 82C located at opposite ends of the inter-component shim assembly 66 (e.g., at the skin side surface 68 and the mount side surface 70). Other configurations for the inter-component shim assembly are not meant to be precluded.

During the step 910, one of these different (e.g., pre-made) inter-component shim assemblies 66 may be selected that most closely matches the size and/or the geometry of the inter-component gap 54 and includes the desired configuration to weld the inter-component shim assembly 66 to the first component and the second component. This selected inter-component shim assembly 66 may then be used in the method 900 as is (e.g., without further modification), or modified (e.g., machined) to even more closely match the size and/or the geometry of the inter-component gap 54.

In step 912, the inter-component shim assembly 66 is arranged with the first component and the second component. The inter-component shim assembly 66 of FIGS. 4A-C, for example, is arranged at the interface 48 between the mount 36 and the first thermoplastic composite part 22. More particularly, the inter-component shim assembly 66 of FIGS. 4A-C is disposed vertically between the mount 36 and the first thermoplastic composite part 22 so as to partially or completely fill and/or bridge the inter-component gap 54 as described above.

In step 914, the second component is welded to the first component. The second thermoplastic composite part 24 of FIG. 7A, for example, is welded to the first thermoplastic composite part 22 at / along the interface 48. The mount 36, for example, is welded to the first thermoplastic composite part 22 at / along the interface 48 through the inter-component shim assembly 66. The mount 36, for example, is welded to at least (or only) the inter-component shim assembly 66, and the first thermoplastic composite part 22 is welded to at least (or only) the inter-component shim assembly 66 at / along the interface 48. A portion of the mount 36, however, may be welded (e.g., directly) to the first thermoplastic composite part 22 at the one or more portions 64A and 64B in which the mount 36 and the mount surface 58 vertically contacts (e.g., lays flush against) the first thermoplastic composite part 22 and the skin surface 56. The structure elements 22, 24 and 66 may be welded together using ultrasonic welding, vibration welding, induction welding and/or any other suitable (e.g., thermoplastic) welding process.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof provide they fall within the scope of the invention as defined by the claims.

## Claims

1. A method for joining thermoplastic components, comprising:
providing (902) a first component (22) comprising a first fiber-reinforced thermoplastic composite;
providing (904) a second component (24) comprising a second fiber-reinforced thermoplastic composite;
arranging (912) a shim assembly (66) at an interface (48) between the first component and the second component, the shim assembly comprising a shim element and an interface material; and
welding (914) the first component to the second component through the shim assembly at the interface.

2. The method of claim 1, wherein the second component (24) is welded to the first component (22) through the shim assembly (66) along a length of the interface (48).

3. The method of claim 1, wherein
the second component (24) is welded directly to the first component (22) along a first portion of the interface; and
the second component is welded to the first component through the shim assembly (66) along a second portion of the interface.

4. The method of any preceding claim, wherein
the shim assembly (66) extends vertically between the first component and the second component; and
the shim assembly has a constant vertical thickness as the shim assembly extends at least one of longitudinally or laterally along the interface, or the shim assembly has a vertical thickness that changes as the shim assembly extends at least one of longitudinally or laterally along the interface

5. The method of any preceding claim, wherein
the interface material comprises a plurality of interface materials (82); and
the shim element (66) is arranged between a first of the plurality of interface materials and a second of the plurality of interface materials.

6. The method of any preceding claim, further comprising:
selecting (910) one of a plurality of shim assemblies based on a configuration of a gap between the second component and the first component at the interface without the shim assembly;
wherein the one of the plurality of shim assemblies is selected based on a size of the gap,
or wherein the one of the plurality of shim assemblies is selected based on a geometry of the gap.

7. The method of any preceding claim, wherein the interface material comprises an energy director, a susceptor or a resistance heating element.

8. The method of any preceding claim, further comprising welding the first component to the second component at a second interface that is discrete from the interface.

9. The method of any preceding claim, wherein the shim assembly is configured as a unitary structure; or:
wherein
the shim element comprises a plurality of shim elements (80); and
the interface material is arranged between a first of the plurality of shim elements and a second of the plurality of shim elements.

10. The method of any preceding claim, wherein the shim element is constructed of a material comprising a fiber-reinforced thermoplastic composite.

11. The method of any preceding claim, wherein the welding comprises one of ultrasonic welding, vibration welding or induction welding the first component to the second component through the shim assembly at the interface.

12. The method of any preceding claim, wherein the interface material is configured as a polymeric film or mesh.

13. The method of any preceding claim, further comprising:
forming an aircraft component;
the aircraft component comprising the first component, the second component and the shim assembly, and the first component forms an exterior surface of the aircraft component.

14. The method of claim 1 being for joining thermoplastic components for an aircraft, the method comprising:
arranging (906) the first component with the second component;
determining (908) a parameter of a gap between the first component and the second component, the gap disposed at an interface between the first component and the second component;
selecting (910) a shim assembly based on the parameter to provide a selected shim assembly, the selected shim assembly comprising a shim element and an interface material;
arranging (912) the selected shim assembly between the first component and the second component at the interface; and
wherein the welding comprising vibration welding, ultrasonic welding or induction welding.

15. the method of claim 1 being for joining a thermoplastic component for an aircraft, the method comprising:
arranging (906) the first component with the second component;
determining (908) a parameter of a gap between the first component and the second component at an interface between the first component and the second component;
providing (910) a shim assembly based on the parameter, the shim assembly comprising the shim element and a plurality of interface materials;
arranging (912) the shim assembly between the first component and the second component at the interface such that a first of the plurality of interface materials is arranged between the first component and the shim element and a second of the plurality of interface materials is arranged between the second component and the shim element; and
wherein the welding comprising vibration welding, ultrasonic welding or induction welding.
